# EUROPÄISCHE PATENTSCHRIFT

(11) **EP 2 646 316 B1**
(45) Veröffentlichungstag und Bekanntmachung des Hinweises auf die Patenterteilung: **22.07.2015**
(21) Anmeldenummer: 11830104.3
(22) Anmeldetag: 26.11.2011
(51) Int. Cl.: B64C 3/14, B64C 23/00, B64C 21/10

(54) **FLEXIBLES FLÜGELPROFIL**
FLEXIBLE WING PROFILE
PROFIL D'AILE SOUPLE

(30) Priorität: 02.12.2010 DE 102010053018
(43) Veröffentlichungstag der Anmeldung: 09.10.2013
(73) Patentinhaber: Schaller, Felix, 85567 Grafing (DE)
(72) Erfinder: Schaller, Felix, 85567 Grafing (DE)
(74) Vertreter: Weickmann & Weickmann
(86) Internationale Anmeldenummer: PCT/DE2011/002041
(87) Internationale Veröffentlichungsnummer: WO 2012/075990

(56) Entgegenhaltungen:
- DE-A1- 3 305 756
- US-A- 2 282 647
- US-A- 6 123 296
- US-A1- 2003 145 980
- US-A1- 2009 308 971

## Beschreibung

### 1.1 Einleitung

Bei der vorliegenden Erfindung handelt es sich um ein Tragflächenprofil, daß sich den Strömungsbediungungen dynamisch durch Profilverformung anpassen kann. Dessen Vorteil besteht darin, dass es sich im Gegensatz zu klassisch starren bzw. mit Klappen versehenen Flügelprofilen bei oft schnell wechselnden Strömungsbedingungen wie z.B. bei Turbulenzen individuell und flexibel in der Profilkontur anpassen kann. Das verbessert die Auftriebseigenschaften und erhöht somit auch die Sicherheit vor Strömungsabriss insbesondere bei Landemanövern. Durch die damit verringerten Turbulenzen wird am Ende auch ein geringerer Strömungswiderstand erreicht.

Das Profil verzichtet dabei im allgemeinen auf eine aktive Steuerung und macht sich stattdessen spezielle Strömungseigenschaften zu nutze, die nachstehend im einzelnen erläutert werden.

US 6123296 offenbart die Merkmale des Oberbegriffs von Anspruch 1.

### 1.2 Beschreibung

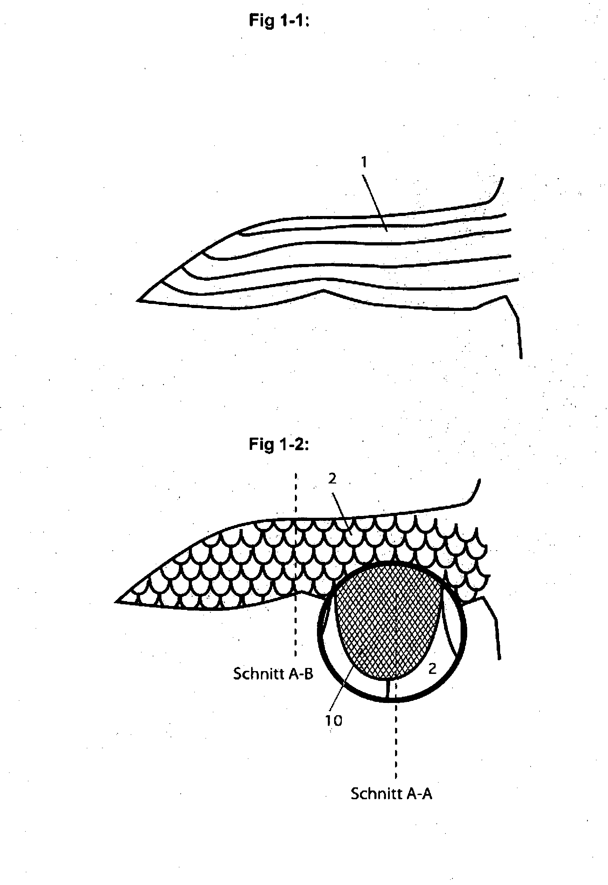

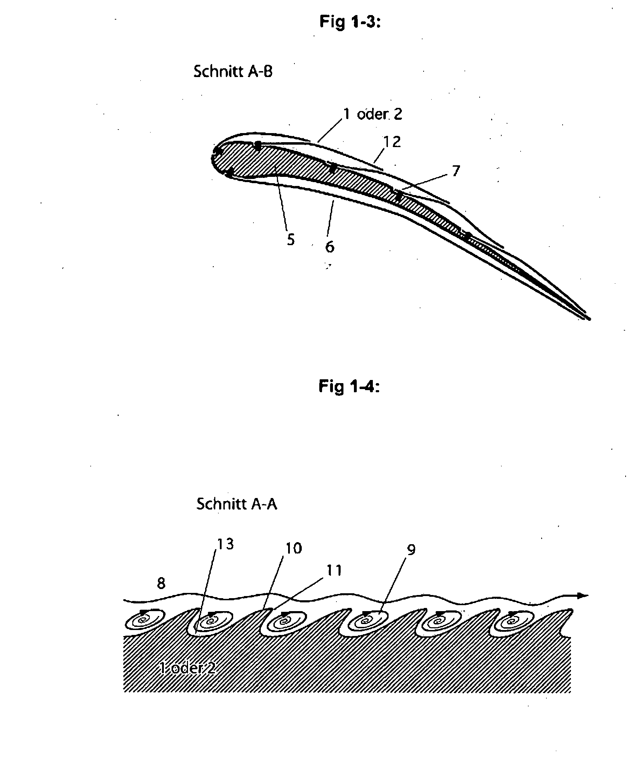

Die erfindungsgemäße Tragfläche bzw. der erfindungsgemäße Flügel hat im Vergleich zu den jetzigen Profilen ein starres oder leicht flexibles Basiselement, an dessen Oberseite eine Mehrzahl von flexiblen flächigen Lamellen (1) (FIG 1-1) angeordnet ist. Diese sind in Flugrichtung am vorderen Teil des Basiselements (5) befestigt und in der Grundstellung benachbart zum Basiselement angeordnet. Des weiteren ist es möglich, dass sich diese Lamellen wiederum in einzelne Elemente (2) entlang der Flügelspanne unterteilen. In Abhängigkeit einer Anströmung der Tragfläche in Flugrichtung können am hinteren Teil angeordnete Hauptabschnitte (12) der oberen Elemente (2) oder Lamellen (1) passiv elastisch vom Basiselement abgehoben werden. Die erfindungsgemäße Abhebung erfolgt durch das Entgegenwirken des Unterdrucks, der an der Oberseite der Elemente (2) oder Lamellen (1) durch die Ablenkung der Luftströmung (und somit Impulsänderung) an der konvex gekrümmten Oberfläche entsteht. Die damit einhergehende Druckdifferenz zwischen Ober- und Unterseite der Elemente richtet diese daraufhin in die Strömung. Bei starker Anstellung bzw. großem Anstellwinkel der Tragfläche vergrößert sich die Ablenkung der Luft. Entsprechend proportional zur Ablenkung ändert sich auch der Unterdruck an der umströmten Oberseite des Elements. Die Elemente wölben sich alle gemeinsam in die Strömung und definieren dynamisch einen sanften gleichmäßigeren Ablenkungsradius, entsprechend der anliegenden Profilanströmung. Damit wird verhindert, dass die Strömung lokal durch abrupte Krümmungsänderung der Oberfläche frühzeitig in turbulente Strömung umschlagen kann. Gemäß dem Stand der Technik wäre dies der Unterschied zu den konventionellen Profilen, die sich nicht verformen können sondern nur auf eine spezielle Toleranz ausgelegt sind.

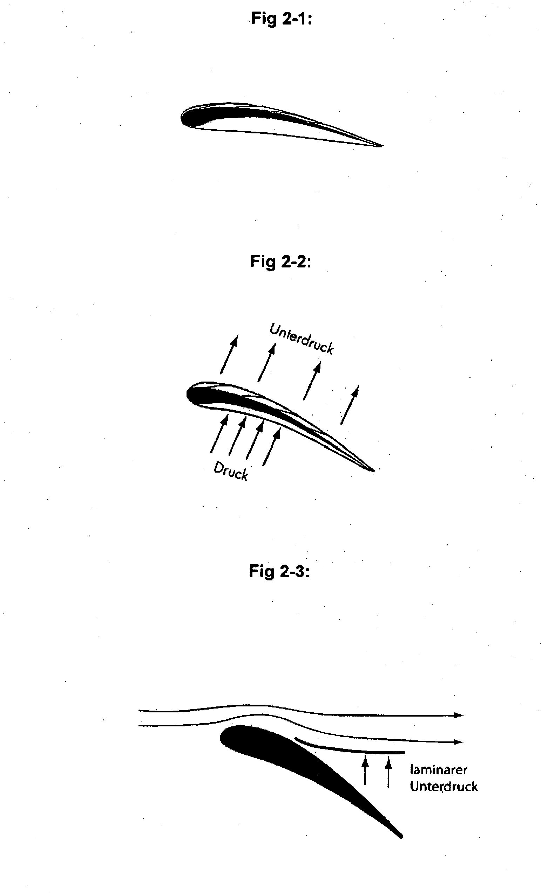

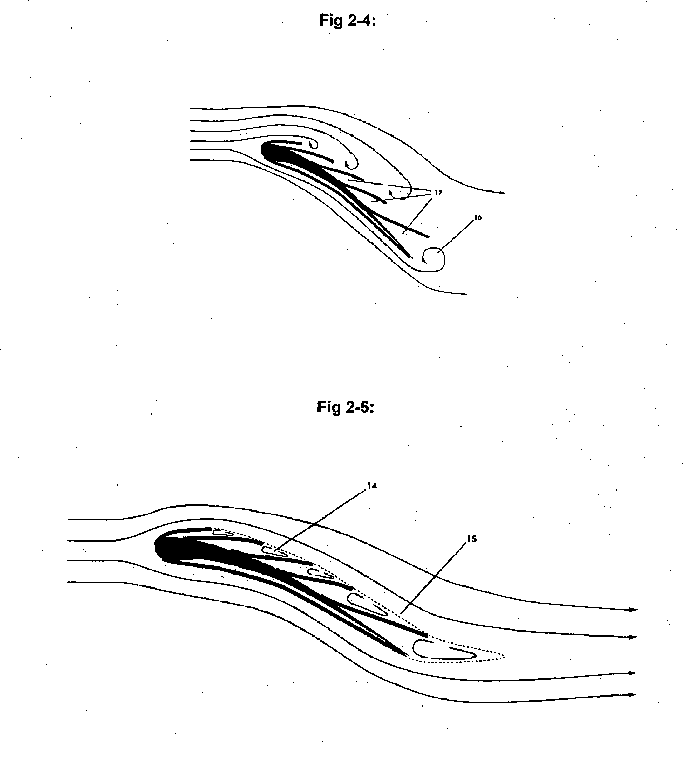

Das Element legt sich bis zu einem gewissen Anstellwinkel des Profils an das Basiselement an. Wenn die laminare Strömung über das gesamte Profil nicht mehr gehalten werden kann reißt die Strömung hinter den Elementen zu Wirbeln ab und strömt auf die Unterseite des Elements. Dadurch wird das Element an der Hinterseite vom Basiselement abgehoben. Gleichzeitig wird verhindert, dass die Wirbel in die laminare Strömung zurückströmen, denn dadurch würde der Unterdruck an der Oberseite des Elements aufgelöst werden. Zwischen den abgehobenen Elementen bilden sich nun Wirbelsäcke (Fig 2-5). Die sich darin bildenden Wirbel vergrößern einerseits die Profilfläche, andererseits verhindern sie größere Wirbel, die den klassischen Strömungsabriss erzeugen würden. Ein Strömungsabriss erfolgt somit erst bei wesentlich kritischeren Anstellwinkeln, welches riskantere Landemanöver erlaubt als konventionelle Flügel. Das heißt, dass die erfindungsgemäße Tragfläche mehr Freiheiten bei einer Landung und damit mehr Sicherheit bietet. Auch bei Normalflug führt die erfindungsgemäße Tragfläche zu besserer Profilanhaftung der Strömung und somit zu besserem Auftrieb.

Bei der Konstruktion des Profils ist vorzugsweise ein jeweiliger in Flugrichtung vorderer Randabschnitt aller oberen Elemente unbeweglich am Basiselement befestigt. Des weiteren weist zumindest ein oberes Element eine elastische Vorspannung in Richtung zum Basiselement auf. Weiterhin weist zumindest ein oberes Element in seiner Grundstellung entlang einer Umströmungsrichtung der Tragfläche bzw. gegen die Flugrichtung betrachtet eine (konvexe) Krümmung zum Basiselement hin und damit eine Wölbung in Auftriebsrichtung der Tragfläche auf.

Vorzugsweise überlappt zumindest ein in Flugrichtung vorderes oberes Element in seiner Grundstellung ein in Flugrichtung hinteres oberes Element in seiner Grundstellung. Die Form zumindest eines oberen Elements ist in Abhängigkeit der Anströmung der Tragfläche passiv elastisch veränderbar. Dabei weist zumindest ein oberes Element in einer vom Basiselement abgehobenen Stellung entlang einer Umströmung der Tragfläche bzw. gegen die Flugrichtung betrachtet eine Krümmung vom Basiselement weg auf. Die Abhebung des Elements von der Oberseite des Basiselements erfolgt unter Bedingungen des Strömungsabrisses und gleichzeitiger Wirbelausbildung am in Flugrichtung hinteren Ende des Elements, welche sodann unter das Element strömt, und somit können die in Flugrichtung am Element (2) oder Lamellen (1) hinten angeordnete Hauptabschnitte (12) der oberen Elemente (2) oder Lamellen (1) von den in Flugrichtung nachfolgenden Elementen abgehoben wird.

In der einfachen Bauweise erstreckt sich zumindest ein oberes Element quer zur Flugrichtung im Wesentlichen über die Länge der Tragfläche. Wenn in Flugrichtung hintereinander mehrere dieser Elemente vorgesehen sind, bilden die Elemente Lamellen (1). Die Lamellen können wiederum in einer erweiterten Bauweise in Einzelelemente aufgeteilt werden und quer zur Flugrichtung benachbart zueinander angeordnet werden. Dabei sind mindestens zwei Reihen vorgesehen, die aus quer zur Flugrichtung benachbart zueinander angeordneten oberen Elementen bestehen. Diese Elemente können Schuppen (2) bilden. Dabei sind die In Flugrichtung hintere Randabschnitte von oberen Elementen vorzugsweise abgerundet oder spitz.

Bei einer bevorzugten Weiterbildung sind an einer Oberseite von oberen Elementen eine Vielzahl von kleinen schuppenartigen Vertiefungen vorgesehen. Diese Beschaffenheit unterdrückt die Ausbildung von Grenzschicht-Turbulenzen und damit ein Flattern der Elemente. Da besonders bei glatten Oberflächen sich ungehindert Turbulenzkeime zu großen Wirbeln ausbilden können wird durch die Vordefinition von "Mikrowirbeln" eine sich verstärkende Kettenreaktion unterdrückt. Gleichzeitig verringern diese ähnlich eines Kugellagers den Reibungswiderstand.

Vorzugsweise ist an einer Unterseite des Basiselements ein flexibles flächiges unteres Element angeordnet, das in Flugrichtung vorne am Basiselement befestigt ist. Dessen mittlerer Abschnitt weist in einer Grundstellung des unteren Elements einen Abstand zum Basiselement auf, der in Abhängigkeit der Anströmung durch Staudruck passiv verringert werden kann, wodurch eine Krümmung des unteren Elements und damit eine Wölbung in Auftriebsrichtung der Tragfläche durch Staudruck passiv erhöht werden kann. Dies unterstützt ebenfalls eine gleichmäßigere Ablenkung der Strömung je nach Anstellwinkel.

Vorzugsweise erstreckt sich das untere Element im Wesentlichen über die gesamte Unterseite des Basiselements.

Zusätzlich kann eine Elastizität zumindest eines oberen oder unteren Elements - z.B. durch Piezo-Einheiten - zusätzlich aktiv eingestellt werden.

### 2.1 Bezugszeichenliste

- 1: Lamelle
- 2: oberes Element
- 5: Basiselement
- 6: unteres Element
- 7: feste Verbindung
- 8: laminare Strömung
- 9: mikro-Wirbel
- 10: Schuppe
- 11: Abrisskante
- 12: Hauptabschnitt
- 13: Vertiefu ng
- 14: Wirbelsäcke
- 15: virtuelle Profilvergrößerung
- 16: Rückstromwirbel
- 17: Windsack

### 2.2 Figurenbeschreibung

**Fig 1-1****:**
   Aufsicht auf einen Flügel mit charakteristischem Flügelprofil. Zu erkennen sind die Elemente die in Strömungsrichtung wie Lamellen (1) übereinander liegen.
**Fig 1-2****:**
   Die Lamellen (1) können wiederum auch in einzelne schuppenartige Elemente (2) unterteilt werden dessen Enden rund oder spitz zulaufen. In der Vergrößerung erkennt man, dass die Elemente (2) selbst wieder mit rautenförmigen Schuppen (10) überzogen sind.
**Fig 1-3****:**
   Flügelprofil im Querschnitt. Zu erkennen sind die übereinander liegenden einzelnen Elemente (2) bzw. Lamellen (1), welche die Außenform des Profils formen. Der vordere Teil der Elemente ist mit dem Basiselement (5) über eine feste, nicht scharnierartige Verbindung (7) verbunden.
**Fig 1-4****:**
   Zeigt den wie in Fig 1-2: gekennzeichneten Schnitt A-A durch ein schuppenartiges Element (2) bzw. Lamelle (1), im Querschnitt wird die Oberflächenbeschaffenheit sichtbar. Die schuppenartigen Vertiefungen (13) erzeugen in den Zwischenräumen Wirbel (9), welche ein gleichmäßiges Raster von Wirbeln erzeugt, damit sich minimale Turbulenzen ("Mikrowirbel") nicht ungehindert zu großen Turbulenzwirbeln verstärken können, wie dies bei glatten Oberflächen normalerweise üblich.
**Fig 2-1****:**
   Zeigt den Querschnitt durch das Flügelprofil im normalen Flugmodus. Die Elemente (2) bzw. Lamellen (1) liegen eng am Basisprofil bzw. Basiselement (5) an. Die weitestgehend laminare Strömung sorgt dafür, dass sich die Elemente (2) bzw. Lamellen (1) aneinander anschmiegen. Das untere Element (6) befindet sich in einer entspannten Position, da wenig Staudruck auf diese Fläche einwirkt.
**Fig 2-2****:**
   Vergrößert sich der Anstellwinkel des Profils, Liegen an dem Profil stärkere Druckdifferenzen zwischen Ober und Unterseite an, wie dies entweder durch starke Wendemanöver oder beim Landeanflug der Fall ist. Strömungen haben die Eigenschaft sich an Oberflächen anzuschmiegen. Ist diese zudem konvex gekrümmt, wird die Strömung an ihr abgelenkt. Aus der Massenträgheit und Impulsänderung der umströmenden Luft in die vertikaler Richtung entsteht als Gegenkraft auf der Oberseite des Profils ein Unterdruck. Je stärker die Ablenkung der Strömung, desto stärker die Druckdifferenzen zwischen Ober- und Unterseite einzelner Elemente(2) oder Lamellen (1). Entsprechend dieser Druckdifferenz wird das Element (2) oder Lamelle (1) von der Strömung passiv angezogen und somit nach oben ausgewölbt.
**Fig 2-3****:**
   Veranschaulicht den Zug des Elements durch die Strömung zur Strömungsrichtung hin. Durch Festsaugen der Strömung an der Oberfläche wird das Element durch Trägheitsimpuls mitgerissen. Diese Eigenschaft ist auch als Conada-Effekt bekannt.
**Fig 2-4****:**
   Ab einem gewissen Anstellungswinkel reicht der Strömungsimpuls nicht mehr aus, so dass die laminare Strömung am Ende der Elemente abreißt und auf dessen Unterseite strömt. Dadurch löst sich das Element von der Oberfläche. Gleichzeitig wird ein Zurückströmen der Wirbel in die laminare Strömung über dem Element verhindert, da es sonst zu einem Strömungsabriss führen würde.
      Wird der Anstellwinkel noch weiter in Bereiche typischer Strömungsabrissbedingungen überzogen, bilden sich nicht nur an den Enden der Elemente Wirbel, sondern über die gesamte Flügel-Oberfläche. Besonders die Strömungen von der Unterseite nehmen nun eine dominante Rolle ein. Strömen diese nun entgegen der Flugrichtung auf die Oberseite und sorgen damit für eine weitere Aufstellung der Elemente und drücken diese von unten auf. Gleichzeitig wird diese Strömung von den Elementen, die für Strömungen entgegen der Flugrichtung nun wie Windsäcke (17) agieren, aufgehalten. Sie unterdrücken damit die Rückstromwirbel (16) und damit ein Abreißen der Strömung.
**Fig 2-5****:**
   Kann die laminare Strömung bei stärkeren Anstellwinkeln nicht weitestgehend über die gesamte Oberseite des Flügels gehalten werden, so reißt diese irgendwann hinter den Elementen (2) oder Lamellen (1) bereits ab. Der Hauptabschnitt (12) des Elements (2) oder Lamelle (1) löst seinen Kontakt mit dem Basiselement (5). Die Luft strömt nun unter das Element. Es entstehen in der sich nun bildenden Lücke zwischen den Elementen (2) oder Lamellen (1) Wirbelsäcke (14) über die in geradliniger Fortsetzung die laminare Strömung darüber weiter homogen strömt. Dadurch bildet sich ein virtuelles erweitertes Profil (15). Durch die Abheftung der elemente (2) oder Lamellen (1) hat sich insgesamt die umströmte Fläche vergrößert was zu zusätzlichen Auftriebseigenschaften beiträgt.

## Patentansprüche

1. Tragfläche, mit einem Basiselement (5), bei dem
an der Oberseite des Basiselements (5) eine Mehrzahl von flexiblen flächigen oberen Elementen (2) oder Lamellen (1) angeordnet ist, die in Flugrichtung vorne am Basiselement (5) befestigt sind, und die in einer Grundstellung benachbart zum Basiselement (5) angeordnet sind,
wobei in Abhängigkeit einer Anströmung in Flugrichtung hinten angeordnete Hauptabschnitte (12) der oberen Elemente (2) oder Lamellen (1) passiv vom Basiselement abhebbar sind, und
wobei zumindest ein oberes Element (2) oder eine Lamelle (1) eine elastische Vorspannung in Richtung zum Basiselement (5) aufweist, **dadurch gekennzeichnet, dass** die oberen Elemente (2) oder Lamellen über eine feste, nicht scharnierartige Verbindung (7) an Basiselement befestigt sind.

2. Tragfläche nach Anspruch 1, wobei zumindest ein oberes Element (2) oder eine Lamelle (1) in einer Grundstellung entlang einer Umströmungsrichtung der Tragfläche betrachtet eine Krümmung zum Basiselement (5) aufweist.

3. Tragfläche nach einem der vorhergehenden Ansprüche, wobei zumindest ein in Flugrichtung vorderes oberes Element (2) oder eine in Flugrichtung vordere Lamelle (1) in einer Grundstellung ein in Flugrichtung hinteres oberes Element (2) oder eine in Flugrichtung hintere Lamelle (1) in einer Grundstellung überlappt.

4. Tragfläche nach einem der vorhergehenden Ansprüche, wobei die Form zumindest eines oberen Elements (2) oder einer Lamelle (1) in Abhängigkeit der Anströmung passiv veränderbar ist.

5. Tragfläche nach einem der vorhergehenden Ansprüche, wobei zumindest ein oberes Element (2) oder eine Lamelle (1) in einer vom Basiselement (5) abgehobenen Stellung entlang einer Umströmung der Tragfläche betrachtet eine Krümmung vom Basiselement (5) weg aufweist.

6. Tragfläche nach einem der vorhergehenden Ansprüche, wobei zumindest eine Lamelle (1) sich quer zur Flugrichtung im Wesentlichen über die Länge der Tragfläche erstreckt.

7. Tragfläche nach einem der Ansprüche 1 bis 5, wobei mehrere obere Elemente (2) quer zur Flugrichtung benachbart zueinander angeordnet sind.

8. Tragfläche nach Anspruch 7, wobei zumindest zwei Reihen vorgesehen sind, die aus quer zur Flugrichtung benachbart zueinander angeordneten oberen Elementen (2) bestehen.

9. Tragfläche nach Anspruch 7 oder 8, wobei in Flugrichtung hintere Randabschnitte von oberen Elementen (2) abgerundet oder rund oder spitz sind.

10. Tragfläche nach einem der vorhergehenden Ansprüche, wobei an einer jeweiligen Oberseite von oberen Elementen (2) oder Lamellen (1) eine Vielzahl von Vertiefungen (13) vorgesehen ist, zwischen denen eine Vielzahl von gleichmäßig an der Oberfläche verteilten zueinander versetzten Schuppen (10) gebildet sind, die in Flugrichtung hinten Abrisskanten (11) aufweisen.

11. Tragfläche nach einem der vorhergehenden Ansprüche, wobei an einer Unterseite des Basiselements (5) ein flexibles flächiges unteres Element (6) angeordnet ist, das in Flugrichtung vorne am Basiselement (5) befestigt ist, und dessen mittlerer Abschnitt in einer Grundstellung des unteren Elements (6) einen Abstand zum Basiselement (5) aufweist, der in Abhängigkeit der Anströmung passiv verringerbar ist, wodurch eine Krümmung des unteren Elements (6) passiv erhöhbar ist.

12. Tragfläche nach Anspruch 11, wobei sich das untere Element (6) im Wesentlichen über die gesamte Unterseite des Basiselements (5) erstreckt.

13. Tragfläche nach einem der vorhergehenden Ansprüche, wobei eine Elastizität zumindest eines Elements (2, 6) oder einer Lamelle (1) aktiv einstellbar ist.

14. Flugzeug mit einer Tragfläche nach einem der vorhergehenden Ansprüche, wobei durch eine Vergrößerung eines Anstellwinkels der Tragfläche oder des Basiselements (5) die Hauptabschnitte (12) der oberen Elemente (2) oder Lamellen (1) passiv abhebbar sind.

15. Flugzeug mit einer Tragfläche nach einem der Ansprüche 11 bis 13, wobei durch eine Vergrößerung eines Anstellwinkels der Tragfläche oder des Basiselements (5) die Hauptabschnitte (12) der oberen Elemente (2) oder Lamellen (1) passiv abhebbar sind, und wobei eine Krümmung des unteren Elements (6) passiv erhöhbar ist.

## Claims

1. An aerofoil, comprising a base element (5), wherein
the upper surface of said base element (5) has a plurality of flexible planar upper elements (2) or lamellae (1) disposed thereon which are fastened to the front of the base element (5) in flight direction and which are arranged adjacent to the base element (5) in a basic position,
wherein, depending on an approaching flow, main sections (12) of said upper elements (2) or lamellae (1) positioned at the rear in flight direction can be passively lifted from the base element, and
wherein at least one upper element (2) or one lamellae (1) has a resilient bias in the direction of the base element (5), **characterised in that** the upper elements (2) or lamellae are fastened to the base element by a fixed, non-hinged connection (7).

2. The aerofoil according to claim 1, wherein, in a basic position, at least one upper element (2) or one lamella (1) has a curvature to the base element (5) seen along a direction of flow around the aerofoil.

3. The aerofoil according to any one of the preceding claims, wherein at least one front upper element (2) in flight direction or one front lamella (1) in flight direction in a basic position overlaps with a rear upper element (2) in flight direction or a rear lamella (1) in flight direction in a basic position.

4. The aerofoil according to any one of the preceding claims, wherein the shape of at least one upper element (2) or one lamella (1) can be passively changed depending on the approaching flow.

5. The aerofoil according to any one of the preceding claims, wherein at least one upper element (2) or one lamella (1) has a curvature away from the base element (5) seen along a flow around the aerofoil in a position lifted from the base element (5).

6. The aerofoil according to any one of the preceding claims, wherein at least one lamella (1) substantially extends over the length of the aerofoil in cross-flight direction.

7. The aerofoil according to any one of claims 1 to 5, wherein multiple upper elements (2) are arranged adjacent to each other in cross-flight direction.

8. The aerofoil according to claim 7, providing at least two rows consisting of upper elements (2) arranged adjacent to each other in cross-flight direction.

9. The aerofoil according to claim 7 or 8, wherein rear edge sections of upper elements (2) in flight direction are rounded or round or pointed.

10. The aerofoil according to any one of the preceding claims, wherein a respective top surface of upper elements (2) or lamellae (1) is provided with a plurality of recesses (13) between which a plurality of staggered scales (10) are formed in even distribution at the surface, said scales having trailing edges (11) at the rear in flight direction.

11. The aerofoil according to any one of the preceding claims, wherein, at a bottom surface of the base element (5), a flexible planar bottom element (6) is disposed which is fastened to the front of the base element (5) in flight direction and the middle section of which is, in a basic position of the bottom element (6), arranged at a distance to the base element (5) which can be passively reduced depending on the approaching flow, whereby a curvature of the bottom element (6) can be passively increased.

12. The aerofoil according to claim 11, wherein the bottom element (6) substantially extends over the entire bottom surface of the base element (5).

13. The aerofoil according to any one of the preceding claims, wherein a resilience of at least one element (2, 6) or one lamella (1) can be actively adjusted.

14. An aircraft, comprising an aerofoil according to any one of the preceding claims, wherein, by an increase of an angle of attack of the aerofoil or base element (5), the main sections (12) of the upper elements (2) or lamellae (1) can be passively lifted.

15. An aircraft, comprising an aerofoil according to any one of claims 11 to 13, wherein, by an increase of an angle of attack of the aerofoil or base element (5), the main sections (12) of the upper elements (2) or lamellae (1) can be passively lifted and wherein a curvature of the bottom element (6) can be passively increased.

## Revendications

1. Surface d'appui dotée d'un élément de base (5), pour laquelle
sur la face supérieure dudit élément de base (5) est disposée une pluralité d'éléments supérieurs, plats et flexibles (2) ou de lamelles (1) qui sont fixés à l'avant sur ledit élément de base (5) dans le sens de vol, et qui sont disposés en position de base adjacents audit élément de base (5),
des sections principales (12) desdits éléments supérieurs (2) ou desdites lamelles (1) disposées à l'arrière pouvant être écartées passivement dudit élément de base en fonction d'un flux dans le sens de vol, et
au moins un élément supérieur (2) ou une lamelle.(1) présentant une précontrainte élastique dans le sens dudit élément de base (5), **caractérisée en ce que** lesdits éléments supérieurs (2) ou lesdites lamelles sont fixés audit élément de base par un dispositif de jonction (7) fixe de type non articulé

2. Surface d'appui selon la revendication 1, au moins un élément supérieur (2) ou une lamelle (1) en une position de base vu le long d'un sens d'écoulement entourant ladite surface d'appui présentant une courbure vers ledit élément de base (5).

3. Surface d'appui selon l'une des revendications précédentes, au moins un élément supérieur (2) avant dans le sens de vol ou une lamelle (1) avant dans le sens de vol chevauche en position de base un élément supérieur (2) arrière dans le sens de vol ou une lamelle (1) arrière dans le sens de vol en une position de base.

4. Surface de support selon l'une des revendications précédentes, la forme d'au moins un élément supérieur (2) ou d'une lamelle (1) pouvant être modifiée passivement en fonction du flux.

5. Surface de support selon l'une des revendications précédentes, au moins un élément supérieur (2) ou une lamelle (1) présentant une courbure vers ledit élément de base (5) dans une position soulevée dudit élément de base (5) vu le long d'un sens d'écoulement entourant ladite surface de support.

6. Surface de support selon l'une des revendications précédentes, au moins une lamelle (1) s'étendant transversalement audit sens de vol, principalement sur la longueur de ladite surface de support.

7. Surface de support selon l'une des revendications 1 à 5, plusieurs éléments supérieurs (2) étant disposés adjacents les uns aux autres transversalement audit sens de vol.

8. Surface de support selon la revendication 7, au moins deux rangées étant prévues et composées d'éléments supérieurs (2) étant disposés adjacents les uns aux autres transversalement audit sens de vol.

9. Surface de support selon la revendication 7 ou 8, des parties périphériques arrière d'éléments supérieurs (2) étant arrondies, rondes ou pointues dans le sens de vol.

10. Surface de support selon l'une des revendications précédentes, une pluralité de creux (13) étant prévus sur une face supérieure respective d'éléments supérieurs (2) ou de lamelles (1), entre lesquels une pluralité d'écailles (10) sont réparties régulièrement et décalées les unes par rapport aux autres sur la surface et qui présentent des arêtes de décollement (11) arrière dans le sens de vol.

11. Surface de support selon l'une des revendications précédentes, un élément inférieur plat flexible (6) étant disposé sur une face inférieure dudit élément de base (5), qui est fixé à l'avant dans le sens de vol sur ledit élément de base (5) et dont la section centrale présente une distance par rapport audit élément de base (5) dans une position de base de l'élément inférieur (6), ladite distance pouvant être diminuée passivement en fonction du flux, ce qui permet d'augmenter passivement une courbure dudit élément inférieur (6).

12. Surface de support selon la revendication 11, ledit élément inférieur (6) s'étendant principalement sur l'ensemble de la face inférieure dudit élément de base (5).

13. Surface de support selon l'une des revendications précédentes, une élasticité d'au moins un élément (2, 6) ou d'au moins une lamelle (1) pouvant être réglée activement.

14. Avion équipé d'une surface de support selon l'une des revendications précédentes, lesdites sections principales (12) desdits éléments supérieurs (2) ou desdites lamelles (1) pouvant être soulevées passivement par un accroissement d'un angle d'incidence de ladite surface de support ou dudit élément de base (5).

15. Avion équipé d'une surface de support selon l'une des revendications 11 à 13, lesdites sections principales (12) desdits éléments supérieurs (2) ou desdites lamelles (1) pouvant être soulevées passivement par un accroissement d'un angle d'incidence de ladite surface de support ou dudit élément de base (5), et une courbure dudit élément inférieur (6) pouvant être augmentée passivement.
